(19) Europäisches Patentamt / European Patent Office / Office européen des brevets

(11) **EP 3 417 093 B1**

(12) **EUROPEAN PATENT SPECIFICATION**

(45) Date of publication and mention
of the grant of the patent:
**29.04.2020 Bulletin 2020/18**

(51) Int Cl.:
***C25B 11/04*** *(2006.01)*          ***C25B 1/10*** *(2006.01)*
***C25B 15/00*** *(2006.01)*          ***C25B 15/08*** *(2006.01)*

(21) Application number: **16713432.9**

(22) Date of filing: **31.03.2016**

(86) International application number:
**PCT/EP2016/057047**

(87) International publication number:
**WO 2017/167373 (05.10.2017 Gazette 2017/40)**

(54) **A TECHNIQUE FOR IN-SITU ANODE ACTIVATION BY A CATHODE IN AN ALKALINE WATER ELECTROLYTIC CELL**

VERFAHREN ZUR IN-SITU-ANODENAKTIVIERUNG DURCH EINE KATHODE IN EINER BASISCHEN WASSERELEKTROLYSEZELLE

TECHNIQUE D'ACTIVATION D'ANODE IN SITU PAR UNE CATHODE DANS UNE CELLULE ÉLECTROLYTIQUE POUR L'ÉLECTROLYSE D'EAU ALCALINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.12.2018 Bulletin 2018/52**

(73) Proprietor: **Siemens Aktiengesellschaft**
**80333 München (DE)**

(72) Inventors:
• **CASPERSEN, Michael**
**3250 Gilleleje (DK)**
• **EGELUND, Sune Daaskov**
**2820 Gentofte (DK)**
• **THERKILDSEN, Kasper Tipsmark**
**4623 Lille-Skensved (DK)**

(56) References cited:
EP-A1- 0 235 860          WO-A1-79/00233
CN-A- 101 781 769          GB-A- 2 129 829

• **LUPI C ET AL: "In situ activation with Mo of Ni-Co alloys for hydrogen evolution reac", INTERNATIONAL JOURNAL OF HYDROGEN ENERGY, ELSEVIER SCIENCE PUBLISHERS B.V., BARKING, GB, vol. 39, no. 5, 22 December 2013 (2013-12-22), pages 1932-1940, XP028668646, ISSN: 0360-3199, DOI: 10.1016/J.IJHYDENE.2013.11.093**

**Description**

The present invention relates to alkaline water electrolysis and more specifically to a method for in-situ anode activation of an anode positioned in an electrolytic cell for alkaline water electrolysis.

In modern times, electrolysis is used for various purposes, for example in Hydrogen and/or Oxygen generation which are achieved by hydrogen evolution reaction (HER) and Oxygen evolution reaction (OER) during electrolysis of alkaline water used as an electrolyte in an electrolytic cell also referred to as an electrolyser. The electrolytic cell includes electrodes, i.e. at least an anode and at least a cathode, that conduct electrical energy to the electrolyte and thus decomposes the electrolyte in the electrolytic cell.

Various types of electrodes are used in the electrolytic cell, for example, commonly used electrodes in the electrolytic cell are a Nickel cathode and a Nickel anode.

The efficiency of alkaline water electrolysis is dependent on overpotential of the electrolytic cell and is increased by reducing the overpotential of the electrolytic cell, hereinafter also referred to as cell overpotential. The cell overpotential is significantly constituted by overpotential of the electrodes i.e. the overpotential of the anode, hereinafter also referred to as the anodic overpotential, and the overpotential of the cathode, hereinafter also referred to as the cathodic overpotential.

The anodic and the cathodic overpotentials are optimized, generally reduced, by various approaches for example either by geometry changes in the electrodes or by applying an electrocatalytic coating forming surfaces of the electrodes. It is well known in the art of alkaline water electrolysis that coating with different catalysts reduce the overpotential of the electrode that is coated and hence energy consumption for the OER and the HER. For example, anodes are typically coated with various oxides of transition elements while cathodes are typically composed of an underlying substrate such as stainless steel on which Raney nickel, nickel sulfide, etc. are coated. The various approaches to reduce the anodic and/or the cathodic overpotentials by surface modification of the anode and/or the cathode are generally referred to as activation. It is customary to use an activated cathode as well as an activated anode in the electrolytic cells for alkaline water electrolysis to achieve an optimum efficiency of the electrolysis.

WO 79/00233 A1 discloses a method of catalysis, using as catalyst, particles whose surfaces are compounds between Sulphur and at least two of cobalt, nickel, iron and manganese, wherein when performed by operating an aqueous alkali electrolysis cell, in which the hydrogen is evolved at the cathode, which comprises the catalyst.

EP 0 235 860 A1 discloses a method for manufacturing an electrode, which comprises electro-depositing a catalytic covering layer which contains at least Nickel and Sulfur, on an electrical-conducting support, characterized in that the support is polarized as cathode in an electrolysis cell with as anode, a soluble nickel plate and with a bath which contains a sulfur-releasing component and a salt from a transition metal other than nickel.

Activation of the anode and the cathode are carried out separately before the electrodes are installed in the electrolyser and before the alkaline water electrolysis is performed. Moreover, if and when any of the electrodes are to be replaced then the replacement electrodes are also required to be activated before the electrodes are installed in the electrolyser and restarting the electrolysis process in the electrolyser. Various methods are used to form an activated anode in addition to formation of an activated cathode, and this requirement of activating the anode before being placed in the electrolytic cell increases at least cost and time of production of the activated anode.

Thus, the object of the present disclosure is to provide a technique for in-situ anode activation that can be performed in the electrolytic cell along with the electrolysis of the alkaline water.

The above object is achieved by a method for in-situ anode activation in an electrolytic cell for alkaline water electrolysis. Advantageous embodiments of the present technique are provided in dependent claims.

An electrolytic cell for alkaline water electrolysis is presented. The electrolytic cell, hereinafter also referred to as the cell, includes a pair of electrodes having an anode and a cathode and a diaphragm. The electrolytic cell may be an individual cell or a part of an electrolyser stack. The diaphragm is disposed between the anode and the cathode i.e. the anode and the cathode are separated by the diaphragm. The diaphragm is gas tight. The anode may be, but not limited to, formed of Nickel only.

At least a part of a surface of the cathode includes an electrically conducting stable material, for example Nickel, and an anode catalytic material, for example Cobalt, Molybdenum, Manganese, Chromium or a combination thereof. The anode catalytic material in the cathode is between 4 percentage by mass of the cathode and 30 percentage by mass of the cathode, and particularly between 10 percentage by mass of the cathode and 15 percentage by mass of the cathode. The anode catalytic material is adapted to be released from the cathode in alkaline water, when present in the cell. The anode catalytic material may be released at open circuit potential of the cell and/or may be released when an external voltage is applied to the cell. The electrically conducting stable material is stable in the cathode i.e. it is not released in the electrolyte or is released in insignificant amount over long period of usage typical of electrolytic cells for alkaline water electrolysis.

The diaphragm is permeable to anode catalytic material i.e. the diaphragm allows passage of anode catalytic material, especially in ionic forms dissolved in or carried in the electrolyte into which the anode catalytic material gets released from the cathode, to pass through it, i.e. the diaphragm, from cathode side of the electrolyte to the anode side of the electrolyte. The anode catalytic material is further configured to be deposited at a surface of the anode when an electric voltage is applied across the anode and the cathode.

As a result of deposition of the anode catalytic material overpotential of the anode is decreased i.e. the anode becomes active. Since the anode is being activated while in seat within the electrolytic cell, and also during the running of the alkaline water electrolysis by application of the external voltage, the activation of the anode is in-situ and occurs simultaneously with the electrolysis of the electrolyte. This at least partly obviates requirement of ex-situ pre-electrolysis activation of the anode.

Furthermore, since the anode catalytic material is being released in the electrolyte from the cathode and since not the entire mass of the anode catalytic material present in the cathode at the start of the electrolysis is released from the cathode simultaneously, a sustained and continuous availability of the anode catalytic material in the electrolyte and subsequently at the anode for deposition on surface of the anode is possible, unlike an alternate scenario in which a similar material intended to be deposited on the anode is presented in the electrolytic cell in the electrolyte directly and thus is available all at once for deposition at the anode and thus the availability of the similar material is not sustained and continuous. This is advantageous because the anode is maintained in the activated state for a longer period of time due to replenishment of any deposited anode catalytic material that the anode might release during the electrolytic process. Moreover, in case there is a requirement to remove an existent anode and insert a new anode into the electrolytic cell, then activation of the new anode happens according to the present technique without needing to replenish the anode catalytic material in the electrolytic cell.

Also, since the anode catalytic material is leaving the surface of the cathode when it is released in the electrolyte, the cathode surface become porous or increased in porosity, and thus the overpotential at the cathode is also maintained or decreased due to the porosity increase in the cathode due to release of the anode catalytic material from the cathode.

Further the electrolytic cell, the part of the surface of the cathode further includes Sulfur, i.e. the cathode is formed of the electrically conducting stable material, the anode catalytic material and Sulfur for example the cathode is formed of Nickel, Cobalt and Sulfur. The sulfur or parts of the sulfur from the cathode during electrolysis in the electrolytic cells, also called electrolyser, is slowly and continuously removed from the cathode into the electrolyte in the electrolyser leaving thereby the electrically conducting stable material i.e. for example nickel. The release of sulfur from the cathode further facilitates release of the anode catalytic material from the cathode.

According to an aspect of the present technique, a method for activating an anode, for example a Nickel anode, positioned in an electrolytic cell for alkaline water electrolysis is presented. The method includes a step of providing a cathode. The cathode provided in the method may be understood same as the cathode presented in according to the previous aspect of the present technique. Subsequently, in the method, a step of releasing the anode catalytic material from the cathode is performed. In the step of releasing the anode catalytic material a part of the anode catalytic material from the cathode is released from the cathode into an electrolyte, i.e. alkaline water, in the electrolytic cell by positioning the cathode in the electrolytic cell such the surface of the cathode is contacted with the electrolyte. The cathode is positioned such that in the electrolytic cell the cathode and the anode are separated by a diaphragm. The diaphragm is gas tight and permeable to the anode catalytic material. The anode catalytic material, for example Cobalt, Manganese, Molybdenum, Chromium, and a combination thereof, may be released at open circuit potential of the cell and/or may be released when an external voltage is applied to the cell.

Finally in the method, a step of depositing the anode catalytic material is performed in which at least a part of the anode catalytic material so released is deposited at a surface of the anode by applying an electric voltage across the anode and the cathode. As a result of deposition of the anode catalytic material at the anode overpotential at the anode is reduced thereby resulting into in-situ activation of the anode. Other advantages presented hereinabove in accordance with the previous aspect of the present technique are also applicable to the method of the present technique.

In an embodiment of the method, the method further includes a step of sustained release of the anode catalytic material from the cathode. The step of sustained release is subsequent to the step of releasing the anode catalytic material from the cathode, and may be simultaneously performed along with the step of depositing the anode catalytic material. In the step of sustained release of the anode catalytic material at least a part of the anode catalytic material from the cathode is released from the cathode into the electrolyte along with applying the external electric voltage across the anode and the cathode. The external electric voltage applied across the electrodes i.e. the anode and the cathode corresponds to a pH of the electrolyte and a molality of the anode catalytic material present in the electrolyte as a result of the release from the cathode. The anode and the cathode overpotentials, as well as the molality of the anode catalytic material present in the electrolyte, corresponds to pH, and in turn the external electric voltage applied is changed or adjusted depending on the pH of the electrolyte

The present technique is further described hereinafter with reference to illustrated embodiments shown in the accompanying drawing, in which:

FIG 1     schematically illustrates an exemplary embodiment of an electrolytic cell having a cathode with an anode catalytic material of the present technique;

FIG 2    schematically illustrates an exemplary embodiment of the electrolytic cell in a state subsequent to a state depicted in FIG 1 of the electrolytic cell;

FIG 3    schematically illustrates an exemplary embodiment of the electrolytic cell in a state subsequent to a state depicted in FIG 2 of the electrolytic cell;

FIG 4    depicts a flow chart showing an exemplary embodiment of a method of the present technique; and

FIG 5    graphically represents a relation between voltage applied, pH and release of the anode catalytic material from the cathode; in accordance with aspects of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

The basic idea of the present technique is to provide an in-situ activation of the anode and thus obviating ex-situ pre-electrolysis activation of the anode. According to the present technique, in an electrolytic cell for alkaline water electrolysis, a cathode is used that includes an anode catalytic material i.e. a material which when deposited on the anode will activate the anode. Furthermore, the anode catalytic material is such that it gets released, mostly in ionic forms, from the cathode into the electrolyte within the electrolytic cell. A part of the ions of the anode catalytic material present in the electrolyte as a result of the release from the cathode, then migrate towards the anode within the electrolyte under the influence of an external voltage applied across electrodes, i.e. the voltage using which the alkaline water electrolysis is being carried out. The migrating ions of the anode catalytic material in the electrolyte pass through a diaphragm which is substantially impermeable to gas but permeable to ions in electrolyte. The migrating ions of the anode catalytic material in the electrolyte pass through the diaphragm from the cathode side of the electrolyte to the anode side of the electrolyte, the cathode and the anode sides of the electrolyte created by the diaphragm positioned between and separating the anode from the cathode. Some of the ions of the anode catalytic material in the electrolyte that pass into the anode side of the electrolyte then get deposited at the anode under the influence of the voltage applied across the electrodes of the electrolytic cell. The deposition of the anode catalytic material reduces the anodic overpotential and thus results into activation of the anode and increase in efficiency of the electrolytic cell.

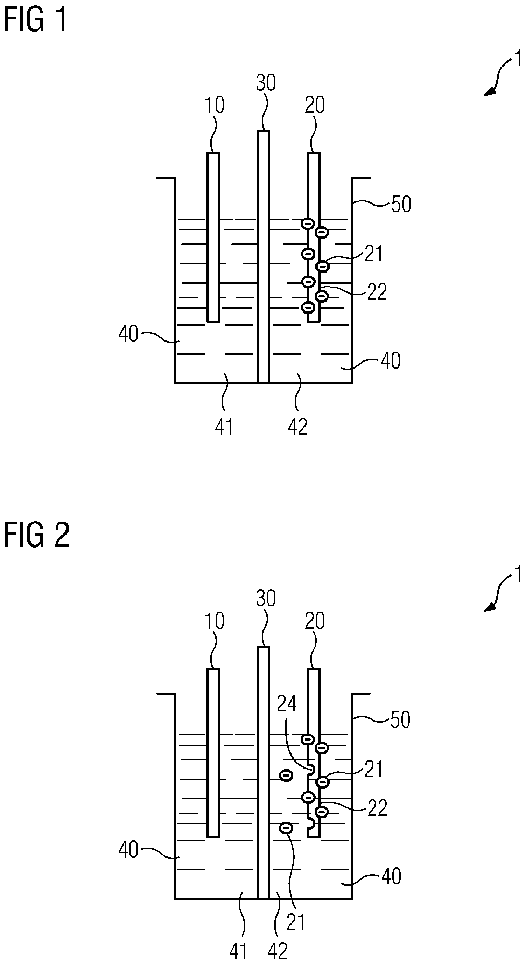

FIG 1 schematically illustrates an exemplary embodiment of an electrolytic cell 1 for alkaline water electrolysis with in-situ activation of an anode 10 in accordance with aspects of the present technique. The anode 10 may be, but not limited to, formed of Nickel only as sheet of Nickel without any surface modification i.e. the anode 10 may be not activated in the sense mentioned hereinabove. To explain further, the anode 10 is not activated when it is initially positioned in the electrolytic cell 1 and before the electrolysis of the alkaline water is performed in the electrolytic cell 1 using the anode 10. The anode 10 is not activated for example, but not limited to, if the anode 10 is devoid of any plating or coating on surface of the anode 10 when it is initially positioned in the electrolytic cell 1 and before the electrolysis of the alkaline water is performed in the electrolytic cell 1.

The electrolytic cell 1 may be an individual cell or a part of an electrolyser stack (not shown). The other electrode in the electrolytic cell 1 is a cathode 20 In the cathode 20, at least a part of a surface of the cathode 20 includes an electrically conducting stable material 22 and an anode catalytic material 21. The electrolytic cell 1 also has a diaphragm 30. The anode 10 and the cathode 20 may be positioned in a container 50 which receives the anode 10, the cathode 20, the diaphragm 30, and an electrolyte 40 i.e. alkaline water, provides a seat for performing the alkaline water electrolysis by applying an external voltage across the anode 10 and the cathode 20 and also provides a seat for in-situ activation of the anode 10 according to aspects of the present technique. The diaphragm 30 is disposed between the anode 10 and the cathode 20 i.e. the anode 10 and the cathode 20 are separated by the diaphragm 30. The diaphragm 30 is gas tight. The diaphragm 30 divides the electrolyte 40 in the container 50 into an anode side 41 of the electrolyte 40 and a cathode side 42 of the electrolyte 40. The anode side 41 of the electrolyte 40 is the part of the electrolyte 40 surrounding the anode 10 whereas the cathode side 42 of the electrolyte 40 is the part of the electrolyte 40 surrounding the cathode 20. Oxygen is evolved in the electrolytic cell 1 as a result of the OER in the anode side 41 and Hydrogen is evolved in the electrolytic cell 1 as a result of the HER in the cathode side 42. Due to gas impermeability of the diaphragm 30, the oxygen evolved in the anode side 41 is restricted to the anode side 41 and does not pass through the electrolyte 40 into the cathode side 42, and similarly, the hydrogen evolved in the cathode side 42 is restricted to the cathode side 42 and does not pass through the electrolyte 40 into the anode side 41.

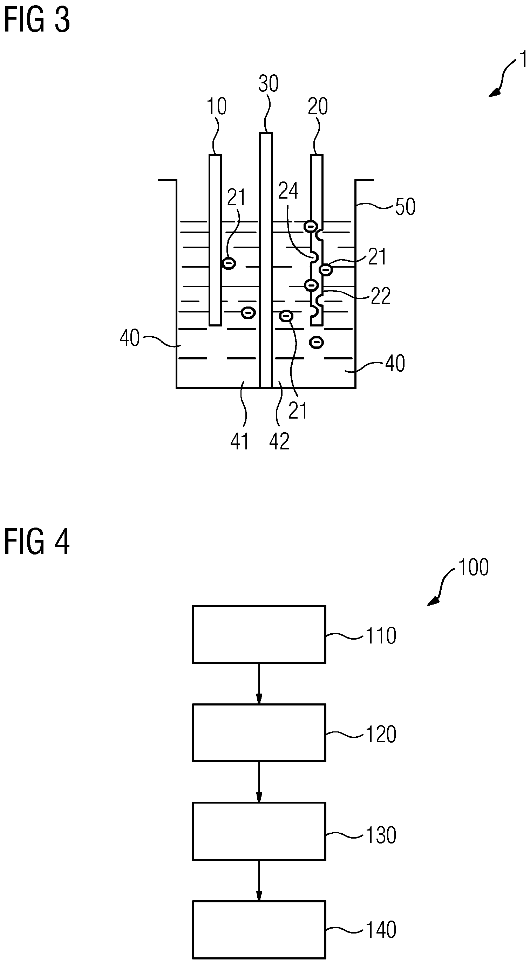

FIGs 2 and 3, respectively, depict exemplary embodiments of the electrolytic cell 1 in states subsequent to a state depicted in FIG 1 of the electrolytic cell 1. FIG 4 depicts a flow chart showing an exemplary embodiment of a method 100 for in-situ activation of the anode 10 of the present technique. Hereinafter, the present technique has been explained with help of the electrolytic cell 1 at different subsequent states depicted respectively by FIGs 1, 2 and 3 and by the method outlines by FIG 4.

Referring to FIG 1, as depicted therein, at least a part of a surface of the cathode 20 includes an electrically conducting stable material 22, for example Nickel, and an anode catalytic material 21, for example Cobalt, Molybdenum, Manganese, Chromium or a combination thereof. Hereinafter, for sake of brevity and ease of understanding, Cobalt has been used as an example for the anode catalytic material 21. The Cobalt 21, hereinafter referred to as the Co 21 in the cathode 20 is between 4 percentage by mass of the cathode 20 and 30 percentage by mass of the cathode 20, and particularly between 10 percentage by mass of the cathode 20 and 15 percentage by mass of the cathode 20. The Co 21 is released from the cathode 20 in the alkaline water 40, i.e. the electrolyte 40, when the electrolyte 40 is present in the electrolytic cell 1 as depicted in FIG 2 which shows a part of the Co 21 being released from the cathode 20 into the cathode side 42 of the electrolyte 40. The Co 21 may be released at open circuit potential of the electrolytic cell 1 i.e. when no external voltage or current is being applied to the electrodes 10 and 20 and/or may be released when an external voltage is being applied to the electrolytic cell 1, the external voltage being applied being the same electrical energy that is applied to the electrolytic cell 1 for carrying out the electrolysis of the electrolyte 40. The electrically conducting stable material 22 is stable in the cathode 20 i.e. the electrically conducting stable material 22 is not released in the electrolyte or is released in insignificant amount over long period of usage typical of electrolytic cell 1 for alkaline water electrolysis.

The diaphragm 30 is permeable to the Co 21 i.e. the diaphragm 30 allows passage of the Co 21, especially in ionic forms for example Cobalt ions with oxidation states of +2, +3 dissolved in or carried in the electrolyte 40 from the cathode side 42 to the anode side 41 of the electrolyte 40. Such diaphragms 30 are commonly used in alkaline water electrolysis and are also referred to as separator membranes. Since such diaphragms 30 are commonly used and well known in the art of alkaline water electrolysis the same has not been detailed here for sake of brevity. The migration of the Co 21 through the diaphragm 30 and from the cathode side 42 to the anode side 41 of the electrolyte 40 results from diffusion of the ions of the Co 21 and is facilitated by the external voltage applied to the electrodes 10, 20 of the electrolytic cell 1. The Co 21 when into electrolyte 40 at the anode side 41 gets deposited at a surface of the anode 10 under the influence of the electric voltage applied across the anode 10 and the cathode 20. The migration of the Co 21 ions from the cathode side 42 into the anode side 41 of the electrolyte 40 and the subsequent deposition of the Co 21 ions on the anode 10 is depicted schematically in FIG 3. The Co 21 ions may get deposited on the anode 10 by in form of oxides, hydroxides and oxyhydroxides for example $Co(OH)_3$, $Co_3O_4$.

Also, since the Co 21 leaves the surface of the cathode 20 as depicted in FIGs 2 and 3, at least a part 24 of the cathode 20 surface become porous or gets increased porosity. In the cathode 20 in the electrolytic cell 1, the part of the surface of the cathode 20 additionally includes Sulfur (not shown), i.e. the cathode 20 if formed of the electrically conducting stable material 22 say Nickel, the Co 21 and Sulfur for example the cathode 20 is Nickel, Cobalt and Sulfur electrode where in the surface of the cathode 20 has all three - Nickel 22, Cobalt 21 and Sulfur.

The sulfur or parts of the sulfur from the cathode 20 during electrolysis in the electrolytic cell 1, also called electrolyser, is slowly and continuously removed from the cathode 20 into the electrolyte 40 in the electrolyser 1 leaving thereby the electrically conducting stable material 22 i.e. for example nickel. The sulfur in the cathode 20 is between 10 percentage and 30 percentage by mass of the cathode 20.

The release of sulfur from the cathode 20 further facilitates release of the Co 21 from the cathode 20 by either detaching at least some of the Co 21 from the cathode 20 along with its, i.e. Sulfur's, release from the cathode 20 and/or modifies the surface of the cathode 20 in such a way, for example by creating micro- or nano- sized protrusions (not shown) on the surface which are highly unstable mechanically and thus are eventually broken off from the surface of the cathode 20 thereby releasing the Co 21 present in this broken off parts into the electrolyte 40. Thus the sulfur in the cathode 20 facilitates release of the Co 21 from the cathode 20 into the electrolyte 40 during alkaline water electrolysis. Furthermore, release of sulfur increases the porosity of the cathode 20 in the same way as explained in FIGs 2 and 3 for release of the Co 21 and thus results in reduction of the overpotential of the cathode 20 along with the Co 21 induced reduction of the overpotential of the anode 10. The sulfur may be removed from the electrolyte 40 subsequently by filtration and thus maintaining the sulfur content equilibrium between the cathode 20 and the electrolyte 40 in such a way that release of sulfur is maintained in a continuous manner which thereby maintains release of the Co 21 from the cathode 20 in continuous manner.

For removal of Sulfur from the electrolyte 40, a complexing agent may be provided into the electrolyte 40. The complexing agent chemically reacts with the Sulfur present in the electrolyte 40, and also with the Sulfur present in the cathode 20, to form a coordination complex having a solid state. The coordination complex is then filtered out from the electrolyte 40 and rendering the electrolyte 40, and thus the electrolyser 1, at least partially free from the sulfur released from the cathode 20. The complexing agent may include, but not limited to, one or more of Barium hydroxide, Barium chloride, Barium nitrate, Strontium hydroxide, Strontium chloride, Strontium nitrate, Calcium hydroxide, Calcium chloride, and Calcium nitrate. Generally the amount of complexing agent when provided to the electrolyte 40 in the container 50 is substantially equal to or less than 1 M (molar) concentration.

The complexing agent reacts with the released sulfur to form the coordination complex with the released sulfur for example as schematically depicted in the following equations (i):

$$SO_4^{2-} + Ba(OH)_2 \rightarrow BaSO_4\ (s) + 2\ OH^- \quad \ldots\ (\text{i})$$

Thus, as shown in equation (i) above, the released sulfur for example the sulfate ion in equation (i) chemically reacts with the complexing agent for example Barium hydroxide in equation (i) to form coordination complex for example in equation (i) Barium sulfate in solid state i.e. $BaSO_4$ (s) in the electrolyte 40 in the container 50. The coordination complex so formed may be removed from the electrolyte 40 by filtration.

Referring now to FIG 4 in combination with FIGs 1 to 3, a method 100 for activating the anode 10 positioned in the electrolytic cell 1 for alkaline water electrolysis is presented. The method 100 includes a step 110 of providing the cathode 20. Subsequently, in the method 100, a step 120 of releasing the Co 21 from the cathode 20 is performed. In the step 120 a part of the Co 21 from the cathode 20 is released from the cathode 20 into the electrolyte 40, i.e. alkaline water, in the electrolytic cell 1 by positioning the cathode 20 in the electrolytic cell 1 such the surface of the cathode 20 is contacted with the electrolyte 40 as shown in FIG 1. The cathode 20 is positioned such that in the electrolytic cell 1 the cathode 20 and the anode 10 are separated by the diaphragm 30 which also forms the anode side 41 and the cathode side 42 of the electrolyte 40. The step 120 may be performed at open circuit potential of the electrolytic cell 1 and/or may be performed when the external voltage is applied to the electrolytic cell 1. Finally in the method 100, a step 140 of depositing the Co 21 is performed in which at least a part of the co 21 so released is deposited at the anode 10 by applying the electric voltage across the anode 10 and the cathode 20.

In an embodiment of the method 100, the method 100 further includes a step 130 of sustained release of the Co 21 from the cathode 20. The step 130 is subsequent to the step 120, and simultaneous along with the step 140. In the step 130 at least a part of the Co 21 from the cathode 20 is released from the cathode 20 into the electrolyte 40 along with applying the external electric voltage across the anode 10 and the cathode 20. The external electric voltage applied across the electrodes i.e. the anode 10 and the cathode 20 corresponds to a pH of the electrolyte 40 and a molality of the Co 21 present in the electrolyte 40 as a result of the release from the cathode 20.

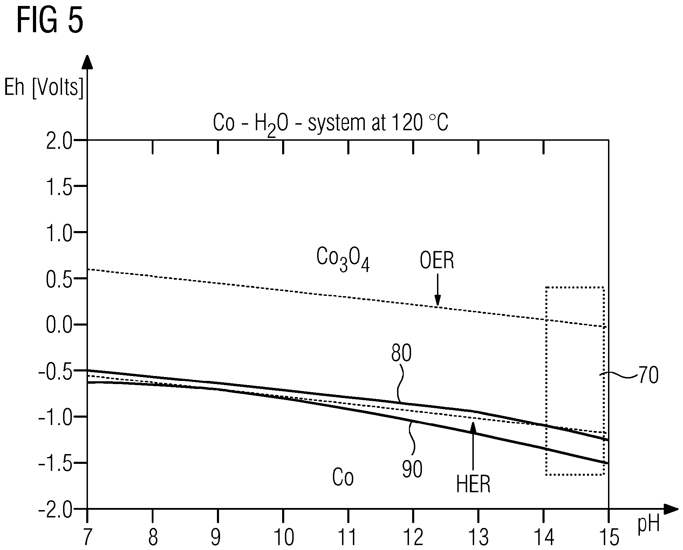

FIG 5 graphically represents a relation between external voltage applied, pH and release of the Co 21 from the cathode 20. The X axis in the graph of FIG 5 represents pH of the electrolyte 40 and the Y axis in the graph of FIG 5 represents oxidation-reduction potentials for Cobalt in Cobalt-water system at 120 degree centigrade and 1.925 bar pressure in the electrolyte cell 1. In FIG 5, reference numeral 80 depicts a curve representing Cobalt molality of 1.000E-03 and reference numeral 90 depicts a curve representing Cobalt molality of 1.000E-09. The graph of FIG 5 also shows the curves for the OER and the HER. As can be seen from the graph of FIG 5, the Cobalt 21 is not stable as elemental Cobalt 21 in the cathode 20 at external voltages corresponding to current densities of -1.0 V (as shown in Y axis) and pH of 14 to 15 (as shown in X axis) for curve 80 and more so for curve 90 as depicted in area of the graph represented by reference numeral 70 in FIG 5. When the Co 21 is unstable in the cathode 20, the Co 21 is released from the Cathode 20 in form of Cobalt oxide ions, Cobalt hydroxide ions, Cobalt oxyhydroxide ions and so and so forth which then migrate within the electrolyte 40 to the anode 10 and get deposited at the anode 10 in form of Cobalt(II,III) oxide ($Co_3O_4$), Cobalt (III) hydroxide, and so on and so forth.

As a result of deposition of the Cobalt 21 at the anode 10, the overpotential at the anode 10 is decreased. The following table provides potential of the electrolytic cell 1, the anode 10 and the cathode 20 under different conditions:

| Anode | Cathode | Cell potential (mV) | Anode potential vs Hg/HgO (mV) | Cathode potential vs Hg/HgO (mV) |
|---|---|---|---|---|
| Ni | Ni | 2101 | 657 | -1467 |
| Externally Activated Ni | Ni | 1982 | 553 | -1454 |
| Ni activated in-situ according to the present technique | Externally Activated Ni | 1664 | 506 | -1154 |
| Externally Activated Ni | Externally Activated Ni | 1649 | 510 | -1135 |

The anode and cathode potentials are expressed in comparison to a Mercury/Mercury Oxide reference electrode. The values in the table are measured at 100 degree Centigrade temperature, 50 wt% KOH as the electrolyte 40, external current at 0,2 A/cm square of each of the electrode, Zero-gap configuration, and total electrode area for each electrode as 25 cm square.

As can be seen in the table above, in first row both the anode 10 and the cathode 20 are not activated i.e. for example when sheets of Nickel are used as the cathode and the anode without any coating for activation or surface modification for activation, and the cell potential is 2101 mV (milivolts) which is contributed primarily by the anode potential of 657 mV and cathode potential of -1467 mV.

Second row of the table only the anode 10 is activated externally ex-situ, contrary to our technique, and the cathode 20 is not activated and the cell potential is 1982 mV which is contributed primarily by the anode potential of 553 mV and cathode potential of -1454 mV. The fourth row presents a scenario where both the anode 10 and the cathode 20 are activated externally ex-situ, the cell potential is 1649 mV which is contributed primarily by the anode potential of 510 mV and cathode potential of -1135 mV. The third row represent the scenario arising from the present technique, i.e. the cathode 20 is activated and includes the anode catalytic material 21 which then is released into the electrolyte 40, migrated to the anode 10 and is deposited on the anode 10, and as can be seen from the third row, the cell potential is 1664 mV which is contributed primarily by the anode potential of 506 mV and cathode potential of -1154 mV - thus the cell potential for the present technique is substantially similar to the cell potential of fourth row, where both the anode and the cathode were ex-site activated separately.

While the present technique has been described in detail with reference to certain embodiments, it should be appreciated that the present technique is not limited to those precise embodiments. The scope of the invention is, therefore, indicated by the following claims rather than by the foregoing description.

## Claims

1. A method (100) for in-situ anode activation of an anode (10) positioned in an electrolytic cell (1) for alkaline water electrolysis, the method (100) comprising:

   - a step (110) of providing a cathode (20) wherein at least a part of a surface of the cathode (20) comprises an electrically conducting stable material (22) and an anode catalytic material (21), the anode catalytic material (21) adapted to be released from the cathode (20) in alkaline water,
   - a step (120) of releasing the anode catalytic material (21) from the cathode (20) wherein a part of the anode catalytic material (21) from the cathode (20) is released from the cathode (20) into an electrolyte (40) in the electrolytic cell (1) by positioning the cathode (20) in the electrolytic cell (1) such the surface of the cathode (20) is contacted with the electrolyte (40), wherein the electrolyte (40) is alkaline water and wherein the cathode (20) is positioned such that in the electrolytic cell (1) the cathode (20) and the anode (10) are separated by a diaphragm (30) configured to be gas tight and permeable to the anode catalytic material (21), and
   - a step (140) of depositing the anode catalytic material (21) so released wherein at least a part of the anode catalytic material (21) so released is deposited at a surface of the anode (10) by applying an electric voltage across the anode (10) and the cathode (20) such that an overpotential at the anode (10) is reduced by deposition of the anode catalytic material (21) at the surface of the anode (10), wherein the part of the surface of the cathode (20) further comprises Sulfur.

2. The method (100) according to claim 1, wherein the step (120) of releasing the anode catalytic material (21) from the cathode (20) into the electrolyte (40) is performed at an open circuit potential of the electrolytic cell (1).

3. The method (100) according to claim 1 or 2, further comprising a step (130) of sustained release of the anode catalytic material (21) from the cathode (20) subsequent to the step (120) of releasing the anode catalytic material (21) from the cathode (20), wherein in the step (130) of sustained release of the anode catalytic material (21) at least a part of the anode catalytic material (21) from the cathode (20) is released from the cathode (20) into the electrolyte (40) along with applying the external electric voltage across the anode (10) and the cathode (20).

4. The method (100) according to claim 3, wherein the external electric voltage applied across the across the anode (10) and the cathode (20) is corresponding to a pH of the electrolyte (40) and a molality of the anode catalytic material (21) present in the electrolyte (40).

5. The method (100) according to any of the preceding claims, wherein the electrically conducting stable material (22) comprises Nickel.

**6.** The method (100) according to any of claims 1 to 5, wherein the anode catalytic material (21) is one of Cobalt, Manganese, Molybdenum, Chromium, and a combination thereof.

**7.** The method (100) according to claim 6, wherein the anode catalytic material (21) in the cathode (20) is between 4 percentage by mass of the cathode (20) and 30 percentage by mass of the cathode (20), and particularly between 10 percentage by mass of the cathode (20) and 15 percentage by mass of the cathode (20).

**8.** The method (100) according to any of the preceding claims, wherein the anode (10) is made of only Nickel.

**Patentansprüche**

**1.** Verfahren (100) zur in-situ-Anodenaktivierung einer in einer elektrolytischen Zelle (1) zur alkalischen Wasserelektrolyse positionierten Anode (10), wobei das Verfahren (100) Folgendes umfasst:

- einen Schritt (110) des Bereitstellens einer Kathode (20), wobei mindestens ein Teil einer Oberfläche der Kathode (20) ein elektrisch leitendes stabiles Material (22) und ein Anodenkatalysatormaterial (21) umfasst, wobei das Anodenkatalysatormaterial (21) so ausgelegt ist, dass es in alkalischen Wasser von der Kathode (20) freigesetzt wird,
- einen Schritt (120) des Freisetzens des Anodenkatalysatormaterials (21) von der Kathode (20), wobei ein Teil des Anodenkatalysatormaterials (21) von der Kathode (20) in einen Elektrolyten (40) in der elektrolytischen Zelle (1) freigesetzt wird, indem die Kathode (20) in der elektrolytischen Zelle (1) so positioniert wird, dass die Oberfläche der Kathode (20) mit dem Elektrolyten (40) in Kontakt gebracht wird, wobei es sich bei dem Elektrolyten (40) um alkalisches Wasser handelt und wobei die Kathode (20) so positioniert wird, dass in der elektrolytischen Zelle (1) die Kathode (20) und die Anode (10) durch ein Diaphragma (30), das gasdicht und für das Anodenkatalysatormaterial (21) durchlässig ausgestaltet ist, voneinander getrennt sind, und
- einen Schritt (140) des Abscheidens des so freigesetzten Anodenkatalysatormaterials (21), wobei mindestens ein Teil des so freigesetzten Anodenkatalysatormaterials (21) auf einer Oberfläche der Anode (10) abgeschieden wird, indem eine elektrische Spannung zwischen der Anode (10) und der Kathode (20) derart angelegt wird, dass eine Überspannung an der Anode (10) durch die Abscheidung des Anodenkatalysatormaterials (21) auf der Oberfläche der Anode (10) verringert wird, wobei der Teil der Oberfläche der Kathode (20) ferner Schwefel umfasst.

**2.** Verfahren (100) nach Anspruch 1, wobei der Schritt (120) des Freisetzens des Anodenkatalysatormaterials (21) von der Kathode (20) in den Elektrolyten (40) Leerlaufspannung bei der elektrolytischen Zelle (1) durchgeführt wird.

**3.** Verfahren (100) nach Anspruch 1 oder 2, ferner umfassend einen Schritt (130) des andauernden Freisetzens des Anodenkatalysatormaterials (21) von der Kathode (20) nach dem Schritt (120) des Freisetzens des Anodenkatalysatormaterials (21) von der Kathode (20), wobei das Freisetzen von mindestens einem Teil des Anodenkatalysatormaterials (21) von der Kathode (20) in den Elektrolyten (40) in Schritt (130) des andauernden Freisetzens des Anodenkatalysatormaterials (21) mit dem Anlegen der externen elektrischen Spannung zwischen der Anode (10) und der Kathode (20) einhergeht.

**4.** Verfahren (100) nach Anspruch 3, wobei die zwischen der Anode (10) und der Kathode (20) angelegte externe elektrische Spannung einem pH-Wert des Elektrolyten (40) und einer Molalität des in dem Elektrolyten (40) vorliegenden Anodenkatalysatormaterials (21) entspricht.

**5.** Verfahren (100) nach einem der vorhergehenden Ansprüche, wobei das elektrisch leitende stabile Material (22) Nickel umfasst.

**6.** Verfahren (100) nach einem der Ansprüche 1 bis 5, wobei es sich bei dem Anodenkatalysatormaterial (21) um Cobalt, Mangan, Molybdän, Chrom oder eine Kombination davon handelt.

**7.** Verfahren (100) nach Anspruch 6, wobei das Anodenkatalysatormaterial (21) in der Kathode (20) zwischen 4 Masseprozent der Kathode (20) und 30 Masseprozent der Kathode (20) und insbesondere zwischen 10 Masseprozent der Kathode (20) und 15 Masseprozent der Kathode (20) ausmacht.

**8.** Verfahren (100) nach einem der vorhergehenden Ansprüche, wobei die Anode (10) ausschließlich aus Nickel besteht.

**EP 3 417 093 B1**

**Revendications**

1. Procédé (100) d'activation d'anode in situ d'une anode (10) placée dans une cellule (1) électrolytique pour l'électrolyse d'eau alcaline, le procédé (100) comprenant :

   - un stade (110), dans lequel on se procure une cathode (20), au moins une partie d'une surface de la cathode (20) comprenant un matériau (22) stable conducteur de l'électricité et un matériau (21) catalytique d'anode, le matériau (21) catalytique d'anode étant conçu pour être libéré de la cathode (20) dans de l'eau alcaline,
   - un stade (120) de libération du matériau (21) catalytique d'anode de la cathode (21), dans lequel une partie du matériau (21) catalytique d'anode provenant de la cathode (20) est libérée de la cathode (20) dans un électrolyte (40) de la cellule (1) électrolytique, en mettant la cathode (20) dans la cellule (1) électrolytique, de manière à ce que la surface de la cathode (20) soit en contact avec l'électrolyte (40), l'électrolyte (40) étant de l'eau alcaline et la cathode (20) étant mise de manière à ce que, dans la cellule (1) électrolytique, la cathode (20) et l'anode (10) soient séparées par un diaphragme (30), configuré de manière à être étanche au gaz et perméable au matériau (21) catalytique d'anode, et
   - un stade (140), dans lequel on dépose le matériau (21) catalytique d'anode tel que libéré, dans lequel au moins une partie du matériau (21) catalytique d'anode ainsi libéré est déposé à une surface de l'anode (10), en appliquant une tension électrique entre l'anode (10) et la cathode (20), de manière à réduire un excès de potentiel à l'anode (10) par dépôt du matériau (21) catalytique d'anode à la surface de l'anode (10), la partie de la surface de la cathode (20) comprenant, en outre, du soufre.

2. Procédé (100) suivant la revendication 1, dans lequel le stade (120) de libération du matériau (21) catalytique d'anode de la cathode (20) dans l'électrolyte (40) est effectué à un potentiel en circuit ouvert de la cellule (1) électrolytique.

3. Procédé (100) suivant la revendication 1 ou 2, comprenant, en outre, un stade (130) libération soutenue du matériau (21) catalytique d'anode à partir de la cathode (20) à la suite du stade (120) de libération du matériau (21) catalytique d'anode à partir de la cathode (20), dans lequel, dans le stade (130) de libération soutenue du matériau (21) catalytique d'anode, au moins une partie du matériau (21) catalytique d'anode provenant de la cathode (20) est libérée de la cathode (20) dans l'électrolyse (40), en même temps que l'on applique la tension électrique extérieure entre l'anode (10) et la cathode (20).

4. Procédé (00) suivant la revendication 3, dans lequel la tension électrique extérieure, appliquée entre l'anode (10) et la cathode (20), correspond à un pH de l'électrolyte (40) et a une molalité du matériau (21) catalytique d'anode présent dans l'électrolyte (40).

5. Procédé (100) suivant l'une quelconque des revendications précédentes, dans lequel le matériau (20) stable conducteur de l'électricité comprend du nickel.

6. Procédé (100) suivant l'une quelconque des revendications 1 à 5, dans lequel le matériau (21) catalytique d'anode est l'un du cobalt, du manganèse, du molybdène, du chrome, et de l'une de leurs combinaisons.

7. Procédé (100) suivant la revendication 6, dans lequel le matériau (21) catalytique d'anode dans la cathode (20) représente entre 4 pour cent en masse de la cathode (20) et 30 pour cent en masse de la cathode (20), et en particulier entre 10 pour cent en masse de la cathode (20) et 15 pour cent en masse de la cathode (20).

8. Procédé (100) suivant l'une quelconque des revendications précédentes, dans lequel l'anode (10) est seulement en nickel.

# FIG 1

# FIG 2

## FIG 3

## FIG 4

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 7900233 A1
- EP 0235860 A1